Europäisches Patentamt

European Patent Office

Office européen des brevets

(11) Publication number: 0 475 016 A2

# EUROPEAN PATENT APPLICATION

(21) Application number: 91111787.7

(22) Date of filing: 15.07.91

(51) Int. Cl.5: H04J 14/02

(30) Priority: 24.08.90 JP 221237/90

(43) Date of publication of application:
18.03.92 Bulletin 92/12

(84) Designated Contracting States:
DE GB

(71) Applicant: HITACHI, LTD.
6, Kanda Surugadai 4-chome
Chiyoda-ku, Tokyo 101(JP)

(72) Inventor: Takahashi, Yasushi
398-3, Uratakaomachi
Hachioji-shi(JP)
Inventor: Tanaka, Katuya, Hitachi Daiyon
Kyoshinryo A309
14-6, Nishikoigakubo-4-chome
Kokubunji-shi(JP)

(74) Representative: Strehl, Schübel-Hopf,
Groening
Maximilianstrasse 54 Postfach 22 14 55
W-8000 München 22(DE)

(54) Wavelength-multiplexed optical network system.

(57) A wavelength separator in a wavelength-multiplexed optical network system uses a wavelength demultiplexer (2) having optical elements having wavelength selectivity arranged in tandem to directly demultiplex light signals by wavelength without distributing all input light signals. When a node device (A-E, M) is down, a power supply fails or a control signal is not issued, the received light signals are not demultiplexed but propagated through an optical wave-guide (2-1).

FIG. 1

## BACKGROUND OF THE INVENTION

The present invention relates to a wavelength-multiplexed optical network system, and more particularly to a network system in which a plurality of terminals are interconnected through optical transmission lines which transmit light signals of different wavelengths in a multiplex mode, and furthermore particularly to a light signal separator in a node unit which couples the optical transmission lines to a plurality of terminals.

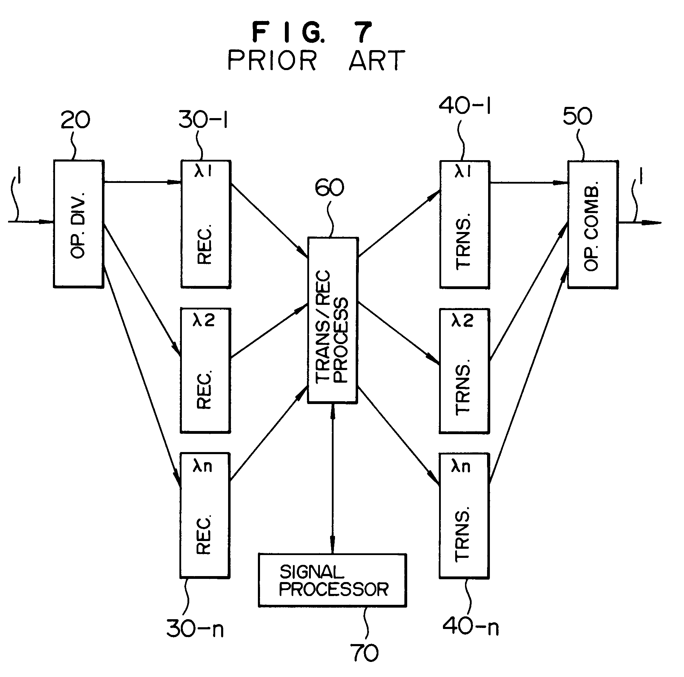

The wavelength-multiplexed optical network system has an advantage in that it permits communication with a plurality of terminals simultaneously through a single line by utilizing multiple wavelengths. To this end, the node unit which couples the optical transmission line to the terminals requires a wavelength separation and wavelength combination unit. Fig. 7 shows a configuration of a prior art wavelength separation unit of the wavlength-multiplexed optical network system. (It is disclosed in JP-A-56-111336 "Wavelength-Multiplexed Loop Communication System"). Input light signals having wavelength multiplexed to be transmitted through an optical transmission line 1 are separated power to number of wavelengths multiplexed by a light distributor 20. The separated light signals are supplied to light receivers 30-1 to 30-n having wavelength selectivity so that the lights of different wavelengths are converted to electrical signals. The signals converted to the electrical signals are supplied to light transmitters 40-1 to 40-n each having a predetermined transmission wavelength through a transmission/reception logic unit 60 so that they are converted to light signals, which are combined by a light combiner 50 and sent out to the optical transmission line 1.

In the prior art technique, the input signal to the light receiver at the mode unit (hereinafter simply referred to as a mode) is a separated signal of the light signal having wavelengths multiplexed. Accordingly, the inputs to the respective optical receivers 30-1 to 30-n decreases in reverse proportion to the number of wavelengths transmitted, that is, the degree of wavelength multiplexity. As a result, a permissible transmission loss is not high. Further, since all light signals are converted to electrical signals which are again converted to light signals for the transmission to the next node, the signals may not be transmitted to the next node if the preceding node is down by a failure such as a power failure. To avoid this problem, a bypassing optical switch need be separately provided, which makes the construction complex.

## SUMMARY OF THE INVENTION

It is an object of the present invention to provide a wavelength-multiplexed optical network system which permits a large permissible transmission loss.

It is another object of the present invention to provide a wavelength-mutliplexed optical network system which can bypass a multiplexed light signal to a next node when a preceding node is down.

In order to achieve the above objects, in the wavelength-multiplexed optical network system of the present invention, a wavelength separation unit of a node uses a wave separator having passive optical elements having a wavelength selectivity to separate a light signal having a specific wavelength from the respective wave guides to a wave guide corresponding to its own wavelength, arranged along the optical wave guide through which the wavelength-multiplexed light signals are propagated.

In a preferred embodiment, an external control signal is applied to a portion which separates a specific wavelength so that the light signal is taken out only when the control signal is present and the light signal is passed when the control signal is absent.

In the wavelength-multiplexed optical network system of the present invention, the wavelength separation unit uses the wavelength demultiplexer having optical elements having the wavelength selectivity arranged dependently. Accordingly, the light inputs of different wavelengths can be directly separated without dividing all input light signals and a division loss which is a problem when the optical divider is used is eliminated and a large permissible transmission loss is permitted.

Where the node is down, a power fails or a control signal is not issued, the received light signals are propagated along the optical wave guide to the next node without wave separation. Thus, a bypass mode is automatically started without a bypassing optical switch.

## BRIEF DESCRIPTION OF THE DRAWINGS

Fig. 1 shows a configuration of a node is one embodiment of a wavelength-multiplexed optical network of the present invention,
Fig. 2 shows a configuration of one embodiment of the wavelength-multiplexed optical network of the present invention in which the above node is used,
Fig. 3 shows a configuration of a left half of a wavelength demultiplexer/wavelength multiplexer of Fig. 1,
Fig. 4 shows a configuration of a node in another embodiment of the wavelength-multiplexed optical network system of the present invention,
Fig. 5 shows a configuration of a control unit 5 in the embodiment of Fig. 4,

Fig. 6 shows a configuration of a node in a further embodiment of the wavelength-multiplexed optical network of the present invention, and

Fig. 7 shows a configuration of a node in a prior art wavelength-multiplexed optical network system.

## DESCRIPTION OF THE PREFERRED EMBODIMENTS

Embodiments of the present invention are explained with reference to the drawings.

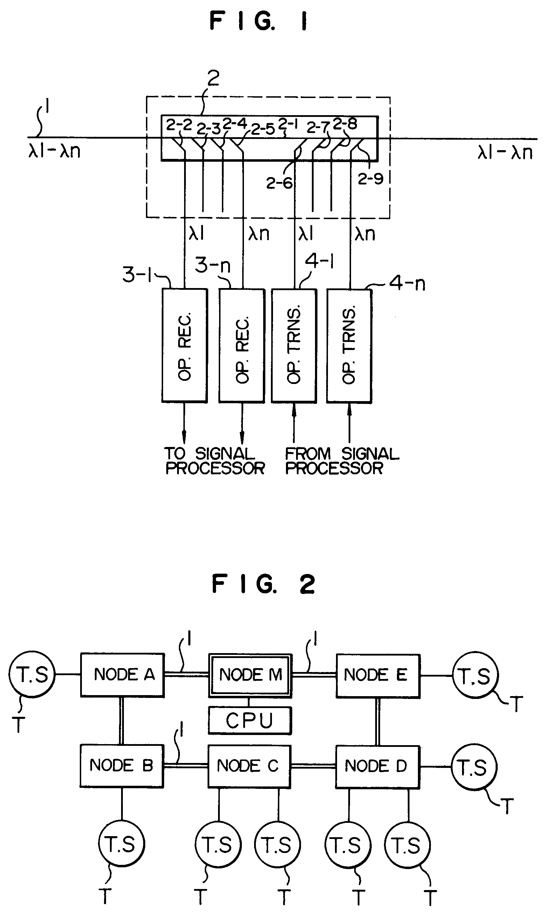

Fig. 1 shows a configuration of a node in a first embodiment of the wavelength-multiplexed optical network system of the present invention. Fig. 2 shows a configuration of the first embodiment of the wavelength-multiplexed optical network of the present invention in which the above node is used.

As shown in Fig. 2, in the wavelenght-multiplexed optical network system, a plurality of nodes A, B, C, D, E and M each having one or more terminals T connected thereto are interconnected in a ring shape by a single optical transmission line 1. Each terminal T is assigned with a specific wavelength of the transmission light signals. The signals of different wavelengths from a plurality of terminals T are transmitted to the optical transmission line 1 as the light signals multiplexed by the wavelength $\lambda_1$ to $\lambda_n$. One node M is a master node which is connected to a signal processing unit which supervises and controls the entire network. The master node M sends information at the wavelength which can be used by each terminal T, by using the wavelength $\lambda_n$, as one of control signals.

The wavelength-multiplexed light signals are supplied to a wavelength demultiplexer/wavelength multiplexer 2 at each node as shown in Fig. 1. The wavelength demultiplexer/wavelength multiplexer 2 has elements 2-2, 2-3, ---, 209 having wavelength selectivity integrated on an optical wave guide 2-1. A left half (2-2, ---, 2-5) of the wavelength demultiplexer/wavelength multiplexer 2 functions as a wavelength demultiplexer for separating the light signals of $\lambda_1$ to $\lambda_n$, and a right half (2-6, ---, 2-9) functions as a wave combiner for supplying the light signals of $\lambda_1$ to $\lambda_n$ to the optical wave guide.

The separated light signals are converted to electrical signals by light receivers 3-1 to 3-n and applied to a signal processing unit (not shown) for necessary processing. Since the light signals have been separated by the wavelength, the light receivers 3-1 to 3-n do not need parts such as optical filters which have wavelength selectivity.

On the other hand, the signals to be transmitted from the signal processing unit are converted to light signals having different wavelengths ($\lambda_1$ to $\lambda_n$) by light transmitters 4-1 to 4-n, and they are combined by the right half (2-6, ---, 2-9) of the wavelength demultiplexer/wavelength multiplexer 2 and supplied to the optical wave guide 2-1 for the transmission to the downstream node. The allocation of the wavelength in the transmission mode is carried out by the signal processing unit in accordance with the wavelength allocation information of the control signal received by the light receiver 3-n.

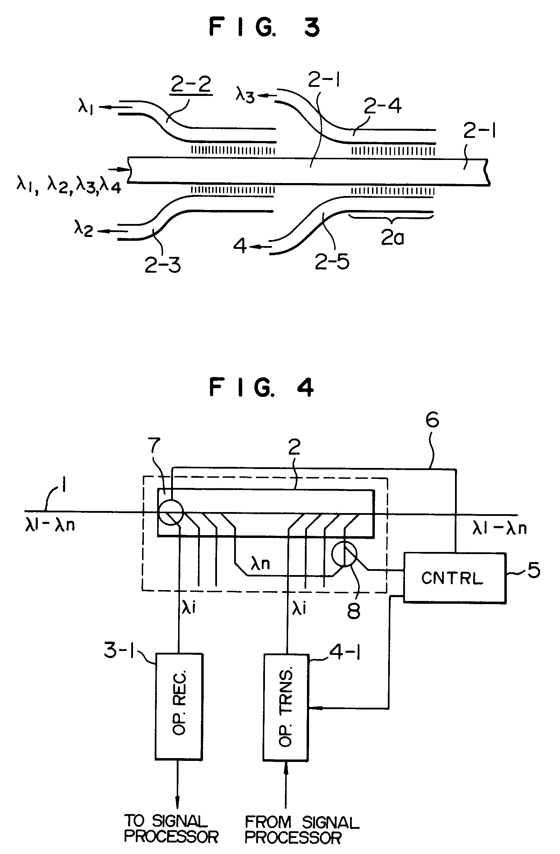

Fig. 3 shows a configuration of the left half of the wavelength demultiplexer/wavelength multiplexer 2. An optical wave guide 2-1 which is directly connected to the optical transmission line 1 and a plurality of wave-separating optical wave guides 2-2, 2-3, 2-4 and 2-5 which have portions arranged in parallel to the optical wave guide 2-1 are formed on the substrate, and gratings having a different refractive index than that of the substrate are arranged at a pitch corresponding to the wavelength to be selected between the optical wave guide 2-1 and the parallel portions to form a coupling unit 2a to the optical wave guide 2-1. As seen from Fig. 3, it is composed of passive elements which do not require a power supply. The wavelength demultiplexer/wavelength multiplexer 2 may be configured as shown in Figs. 1 and 2 of Applied Optics, Vol. 19, No. 16, pp. 2849, Aug. 1980.

In accordance with the present embodiment, it is not necessary to divide the light signals into the number of the multiplexed wavelengths but necessary to separate or combine only the signals of required wavelength. Accordingly, a large permissible transmission loss is permitted. Further, since the light receiver 3-i (i = 1, ---, n) need not have the wavelength selectivity, the configuration is simplified and advantages which will be explained in the following embodiment are offered.

Fig. 4 shows a configuration of a node in another embodiment of the wavelength-multiplexed optical network system of the present invention. A fundamental difference from the embodiment of Fig. 1 lies in that a wavelength demultiplexer wavelength control unit 7 which applies a control voltage to a wave separation portion (only one point in the embodiment) of the wavelength demultiplexer/wavelength multiplexer 2 is added. The wavelength information at the wavelength $\lambda_n$ to be used by the respective nodes is sent from the master node by using the light signal of the wavelength $\lambda_n$. The node demultiplexes the light signal of the wavelength $\lambda_n$. A portion of the signal is taken out by a branch 8, decoded by a control unit 5 to generate a control signal, which is sent to the control unit 7 through a control signal line 6. Other portion of the signal is applied to the optical wave guide for the transmission to the downstream node.

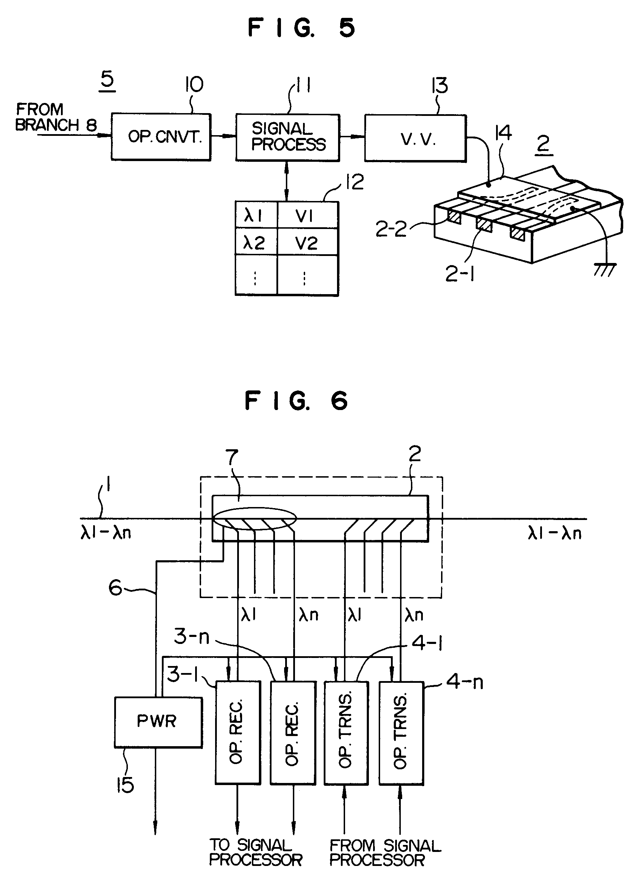

Fig. 5 shows a configuration of an embodiment of the control unit 5 and the wavelength demultiplexer wavelength control unit 7.

The light signals from the branch 8 are converted to electrical signals by a photo-electric converter 10, and they are applied to a signal processing circuit 11, which checks the wavelength information assigned to its own node and other nodes, and looks up a table 12 to read control information necessary to control to demultiplex the wavelength $\lambda_i$ assigned to its own node. Control voltages for the wavelengths are stored in the table 12. A control voltage signal retrieved from the table 12 is converted to a control voltage by a variable voltage circuit 13 and it is applied to the wavelength demultiplexer 2. The wavelength demultiplexer 2 has a heater plate 14 arranged on the gratings of the coupling unit 2a shown in Fig. 3. By changing a current flowing therethrough, the demultiplexed wavelength is changed with temperature. By changing the magnitude of current, a desired wavelength $\lambda_1$ out of $\lambda_1$ to $\lambda_n$ is selected for processing. When the signal is to be sent to the next node, it is necessary to use the wavelength $\lambda_i$ again. Thus, the control unit 5 sends a control signal to the light transmitter 4-1 which sets the transmission wavelength to $\lambda_i$.

In the present embodiment, the optical signal of only the required wavelength can be taken out by only the signal applied to the control signal line 6 so that the number of light receivers/transmitters is minimized. While the demultiplexed wavelength is controlled by changing the temperature in the above embodiment, it may be controlled by forming the wavelength demultiplexer 2 by a piezoelectric device and changing an applied voltage, the separation wavelength control can be achieved even though a refractive index is changed.

Fig. 6 shows a configuration of a node in other embodiment of the wavelength-multiplexed optical network system of the present invention. In the present embodiment, the wavelength demultiplex characteristic of the wavelength demultiplexer/wavelength multiplexer 2 is designed such that when the node is in operation, a control signal is applied to all wavelength demultiplexed portions of the wavelength demultiplexer/wavelength multiplexer 2 to demultiplex the light signals. When the control signal is applied, the light signals of $\lambda_1$ to $\lambda_n$ are demultiplexed, and when the control signal is not applied, the demultiplexed wavelength is in a wavelength band which is not used in the system. Accordingly, when the node is down and does not issue the control signal, the wavelength demultiplexer/wavelength multiplexer 2 does not take out the light signals and the light signals are sent to the next node through the optical wave guide 2-1. Thus, when the node is down, the bypass mode is automatically set so that the wavelength demultiplexer/wavelength multiplexer 2 functions as a mere optical transmission line.

Accordingly, in the present embodiment, an optical switch for bypassing is not needed and the configuration is simplified. Further, even if one node goes down in a ring network comprising a plurality of nodes, the other nodes are not affected and hence the reliability is improved.

In accordance with the present invention, only the wavelength component that is to be demultiplexed at the node is demultiplexed and no light power division is needed. Accordingly, a large permissible transmission loss is permitted. Since the light receiver need not have the wavelength selectively, the selection wavelength of the wavelength demultiplexer is directly connected to the light amplifier may be variable so that the allocation of the wavelengths to the respective nodes is facilitated. The wavelengths to be used by the respective nodes may be allocated from the master node in accordance with the operation status of the network system.

## Claims

1. A wavelength-multiplexed optical network system having a plurality of terminals (T) interconnected through node devices (A, B, C, D, E, M) by an optical transmission line (1) for transmitting a plurality of light signals by multiplexed wavelength, comprising:

    wave separation means (2) for directly demultiplexing a light signal of at least one wavelength of the plurality of wavelength-multiplexed light signals from said optical transmission line;

    a light receiver (3-1) for supplying the light signal demultiplexed by said wavelength demultiplexing means to a signal processing circuit; and

    wavelength multiplexing means (2) for multiplexing a light signal converted from the signal of said signal processing circuit by said light receiver with other light signals for transmission to the optical transmission line.

2. A wavelength-multiplexed optical network system according to Claim 1 wherein said wavelength demultiplexing means and said wavelength multiplexing means are connected in series through an optical wave guide.

3. A wavelength-multiplexed optical network system according to Claim 1 wherein at least one of said wavelength demultiplexing means and said wavelength multiplexing means comprises a first optical wave guide for coupling said optical transmission line, a second optical wave guide for wavelength demultiplexing or wavelength multiplexing having a portion thereof arranged in the vicinity of said first optical wave guide, and a grating coupler having a parallel-coupling or antiparallel coupling grating arranged between said first optical wave guide and the portion of said second optical wave guide in the vicinity of said first optical guide.

4. A wavelength-multiplexed optical network system according to Claim 1 wherein said wavelength demultiplexing means demultiplexes a light signal of at least one wavelength of a wavelength preassigned to the node device, an externally designated wavelength and a wavelength requested by the node device.

5. A wavelength-multiplexed optical network system according to Claim 1 further comprising a control unit for driving said wavelength demultiplexing means, said control unit setting a wavelength to be demultiplexed in accordance with a control signal and causing said wavelength demultiplexing means and said wavelength multiplexing means to bypass the light signal when the control signal is absent.

6. A wavelength-multiplexed optical network system having a plurality of node devices connected in a ring through an optical transmission line for transmitting light signals of different wavelengths by one or more terminals connected to each of said node devices by wavelength multiplication,

one of said node devices comprising means for transmitting a control information signal for designating wavelengths to be used in other node devices, by a signal of a specific wavelength of the wavelength-multiplexed light signals, and

each of said other node devices comprising a wavelength demultiplexer for directly demultiplexing the light signal of the wavelength designated by the control information signal from said optical transmission line, and a control circuit for controlling the wavelength to be demultiplexed by said wavelength demultiplexer in accordance with the control information signal transmitted by the light signal of the specific wavelength.

7. A wavelength-multiplexed optical network system having a plurality of terminals interconnected through node devices by an optical transmission line for transmitting a plurality of light signals by multiplexed wavelengths, each of said node devices comprising:

a wavelength demultiplexer including a first optical wave guide connected to said optical transmission line at an input thereof and said optical transmissin line at an output thereof, and a second optical wave guide for demultiplexing a light signal of a specific wavelength from said first optical wave guide through a coupler having wavelength selectivity; and

control means for coupling the wavelength to be demultiplexed to said coupler when said terminals and said node device are in operation and coupling said input optical transmission line and said output optical transmission line to bypass the light signals when said terminals and said node device are not in operation.

# FIG. 1

TO SIGNAL
PROCESSOR

FROM SIGNAL
PROCESSOR

# FIG. 2

# F I G. 3

# F I G. 4

7

# F I G. 5

# F I G. 6

EP 0 475 016 A2

## F I G. 7
## PRIOR  ART

9